# EUROPEAN PATENT SPECIFICATION

(11) **EP 1 228 704 B1**
(45) Date of publication and mention of the grant of the patent: **28.04.2004**
(21) Application number: 02075204.4
(22) Date of filing: 18.01.2002
(51) Int. Cl.: A23L 1/231

(54) **Process and equipment for preparing flavouring compositions**
Verfahren und Geräte zur Herstellung von Geschmackszusammensetzungen
Procedé et appareil pour la production des compositions flavorants

(30) Priority: 05.02.2001 EP 01200379
(43) Date of publication of application: 07.08.2002
(73) Proprietor: UNILEVER N.V., 3013 AL Rotterdam (NL); UNILEVER PLC, London EC4P 4BQ (GB)
(72) Inventor: Braat, Petrus Wilhelmus, 3133 AT Vlaardingen (NL); Klaffke, Werner, 3133 AT Vlaardingen (NL); Tissen, Johannes Theodorus Wilhelmus M., 3133 AT Vlaardingen (NL); Visser, Adrianus, 3133 AT Vlaardingen (NL)
(74) Representative: Wurfbain, Gilles L.

(56) References cited:
- CH-A- 507 665
- US-A- 4 194 017
- US-A- 4 879 130
- US-A- 5 962 061

## Description

### Field of the invention

The present invention relates to a process and equipment for preparing flavouring compositions. More specifically, it relates to a process and equipment for preparing flavouring compositions by so-called Maillard reactions, in particular fast Maillard reactions.

### Background of the invention

When carbohydrates (sugars or source thereof, like e.g. polysaccharides or unspecified glycosides) and amino acids (or source thereof, such as protein, glycoprotein, peptide), or materials containing sugars and amino acids are heated under specific conditions (pH, t, T, etcetera), a "soup" containing a wide variety of reaction products can be formed. Many of the formed reaction products, in particular the more volatile components, are known to have properties that make them desirable in flavour and/or aroma compositions, e.g. for use in foods and drinks. Such compounds are known as Maillard flavours.

Maillard flavours can be savoury flavours, although many can also be described as having a nutty, caramel, jammy, burnt, sulphury, or other character. Maillard flavours are formed in normal cooking processes, such as e.g. frying (deep or shallow), roasting and grilling. Examples are the frying of meat, or the formation of an "au gratin" crust of heated cheese, and the browning of bread.

Flavour and/or aroma compositions containing Maillard flavour and/or aroma components are used in many fields of food processing. Almost all flavour suppliers have a range of Maillard-type flavour compositions for flavouring purposes. Such compositions are usually prepared by heating minimally a sugar (or carbohydrate source) together with a nucleophilic species, such as biogenic amines, amino acid(s), or sources of amino acids such as peptides or proteins and their hydrolysates or extracts, e.g. HVP, yeast extracts and hydrolysates, or soy sauces, at certain conditions. This may further contain additives such as salts, cosolvents, buffers, other compounds which are found on the FEMA GRAS list such as aldehydes, ketones, alcohols, amines, organic acids, esters and lactones, explicitly fatty acids or esters thereof, cyclic heterocycles, thiols, ethers, thioethers such that Maillard flavours are formed (together with non-volatile compounds of usually higher molecular weight or polarity, as well as insoluble coloured polymeric material). Also may be present: HVP, fats, yeast extracts, meat extracts, other hydrolysates, soy sauce, peptones, fatty acids and fractions thereof. Said flavouring compounds may also be prepared starting from reaction products of carbonyl compounds (as defined above) and a nucleophilic species (as defined above). For the purpose of this invention, the above is summarised as "reactants". Whenever "reactants" is used throughout this patent description, the description of the group of compounds above is encompassed.

Numerous reactions take place during the heating process aimed at production of Maillard flavours, due to the fact that amino acids and sugars can react in different ways, but also because the reaction products in turn can undergo further reaction (chain reaction), and also because many different sugars and different amino acids give different reaction products, having different sensory properties. Also, processing conditions such as the duration of the reaction (t), the temperature (T), acidity (pH), water activity (aw) of the reaction mixture and their change during the reaction time, and others have a considerable influence on the resulting Maillard flavour and its character.

US 4 194 017 discloses a process to prepare a flavouring mix paste by a maillard-reaction. Such paste is used to flavour soups.

Maillard reactions are generally obtained by making an aqueous solution of reactants (i.e. sugars and a nucleophilic species, as above defined), heating said solution to temperatures of 100-180°C for about an hour, until a reaction mixture is formed having the desired reaction conditions. When the purpose is to prepare a specific flavouring mixture, this may be acceptable. However, for some specific applications it may be desired to obtain reaction products of Maillard reactions in a very short time frame, say in less than 15 minutes, or even in 1 minute, or even in less than 20 seconds. Such fast Maillard reactions would open up a whole new area of application, such as for example in preparing tailor-made flavourings for a single consumer or small group of consumers.

Additionally, such fast Maillard reactions would allow the in-situ formation of unstable reaction compounds, e.g. certain sulphur-containing reaction products, which are valuable in preparing a flavouring composition giving the impression of being freshly prepared.

Therefore, there is a need to reduce the time involved in preparing Maillard reaction products that have flavouring properties.

### Summary of the invention

It has now been found that the above may be achieved (at least in part) by a process for preparing a flavouring mix, which process comprises heating a composition comprising reactants and at least 20% (wt) water to a temperature of 100-250°C to such an extent that the water content of the composition is reduced to less than 5% wt. within 10 minutes after the application of heat is started. Preferably, for a wide range of possible applications the water content of the composition is reduced to less than 5% wt. within 1 minute after the application of heat is started, more preferably within 20 seconds, most preferably within 10 seconds.

In the processes according to the invention, the reactants preferably comprise a sugar (or carbohydrate source) and a nucleophilic species, both as are defined above. Preferably, the nucleophilic species comprises biogenic amines, amino acid(s), sources of amino acids such as peptides or proteins and their hydrolysates or extracts, HVP, yeast extracts, yeast hydrolysates, soy sauces or mixtures thereof.

### Detailed description of the invention

Depending upon the flavour that one wishes to obtain, it may be preferred that the reactants comprise a sugar (or source thereof) and an amino acid (or source thereof).

It is believed that the Maillard reaction can take place in both an aqueous and non-aqueous environment. However, the outcome which is represented by the aroma volatiles and thus the produced amount and range of molecules is different. The range of flavour impressions tends to shift from a boiled note towards a more roasted impression in the latter case. Water is preferred for dissolving the ingredients, and to initiate the Maillard reaction. The reactants may then in whole or part be dissolved to form an aqueous solution (which may be homogeneous), or part of the reactants may be present as a dispersion in an aqueous liquid. Then for the reaction to take place in the preferred regime to give more "roasted" flavours, part or all of the water should evaporate, so the heat applied should be sufficient to have that happen, and the water vapour should be able to escape from the reactants. Preferably, the application of heat should be such that the temperature reaches a maximum of between 100 and 200°C, preferably between 120 and 180°C. There are numerous conventional ways in which this can be achieved. The water that is present at the start of the reaction may comprise (pH) buffering components, so that a specific pH can be achieved.

In order to achieve a fast reaction, fast water removal is preferred. This may suitably be achieved if the total amount of the reaction mixture (i.e. of the reactants and water) are small, and/or if the water amount is just sufficient to dissolve the reactants. The smaller the quantity to be heated, the more easy it will be to achieve a proper heat transfer to obtain a fast water evaporation. Applying a reduced pressure may also help to achieve this. For the purpose of this invention, the total amount of the composition comprising reactants and water is between 10 mg and 10 g. Likewise, subjecting the mixture to hot, dry gas (flow) may also help in reducing the water content.. Although fast water removal is key, it may also be preferred that the water removal is done in a fast, yet gradual and/or controlled way.

The invention further relates to food processing equipment comprising:
- a reaction vessel
- means for filling the reaction vessel with an aqueous solution of reactants
- means for heating the contents of the reaction vessel within 15 minutes (preferably 1 minute, more preferably 20 seconds) to a temperature of above 100°C
- means for emptying the vessel,
wherein the vessel is constructed such that the water from the aqueous solution of reactants may be removed prior to or during heating the contents of the reaction vessel.

Such arrangement may be a suitable way in executing the process as set out above.

In the above equipment, the water removal from the reaction vessel may suitably be achieved by evaporation, optionally also by applying reduced pressure, by conventional means.

The means for heating may be any conventional (or nonconventional) heating means. Suitable arrangements include heating by electrical resistance elements.

An advantage of the presently claimed process and equipment is that now Maillard flavours can be prepared rapidly, on-the-spot flavour generation may be possible in e.g. food vending machines (e.g. for selling soups or snacks). This would allow flavours to be generated once a consumer orders a soup portion, and the flavour could be ready in matters of seconds to minutes (or even less than a second). As a result of this, Maillard-flavoured compositions may be obtained which give a very fresh impression, as such compositions (by virtue of them containing just generated Maillard-flavour compositions) may contain volatile or unstable compounds which are difficult to keep present in compositions which are prepared in a more conventional way, e.g. well before the moment of consumption. It also would allow the possibility of tailored flavour compositions to be made: i.e. tailored to the individual consumer's preference.

### EXAMPLES

### Example 1

### Experimental procedure: open glass tube.

A reaction mixture was prepared consisting of a phosphate buffer (70mg Na2HPO4, 88mg NaH2PO4) in which was dissolved xylose (17mg), cysteine (16.5mg), proline (70mg), and methionine (4mg) dissolved in 10ml distilled water. An aliquote (0.5 ml) of the reaction mixture was placed in an open glass tube and heated for 30 sec. at 160°C by placing in a pre-heated oil bath. Upon completion of the reaction a red-brown coloured viscous residue was obtained, which was taken up in water (about 4 ml) and added to 175 ml of an instant soup (beef bouillon) preparation. The resulting soup preparation had a clear fresh roast beef flavour. The soup without the added reaction flavour clearly lacked this fresh raost beef flavour.

### Example 2

### Experimental procedure: open glass tube.

A reaction mixture was prepared consisting of a phosphate buffer (70mg Na2HPO4, 88mg NaH2PO4) in which was dissolved maltose (69mg), cysteine (28mg), proline (28mg), and asparagine (35mg) dissolved in 10ml distilled water. An aliquote (0.5 ml) of the reaction mixture was placed in an open glass tube and heated for 30 sec. at 160°C by placing in a pre-heated oil bath. Upon completion of the reaction a red-brown coloured viscous residue was obtained, which was taken up in water (about 4 ml) and added to 175 ml of an instant soup preparation as above. The resulting soup preparation had a popcorn flavour impression flavour.

### Example 3

### Experimental procedure: open glass tube.

A reaction mixture was prepared consisting of a phosphate buffer (70mg Na2HPO4, 88mg NaH2PO4) in which was dissolved glucose (50mg), fructose (20mg), rhamnose (30mg), proline (60mg), alanine (10mg) and leucine (2mg) dissolved in 10 ml distilled water. An aliquote (0.5 ml) of the reaction mixture was placed in an open glass tube and heated for 30 sec. at 160°C by placing in a pre-heated oil bath. Upon completion of the reaction a red-brown coloured viscous residue was obtained, which was taken up in water (about 4 ml). The flavour impression of this reaction mixture was that of freshly baked breadcrust.

### Examples 4, 5, 6

### Experimental procedure: conducting metal strip.

The buffered reaction mixtures (20µl) as described in examples 1, 2, 3, respectively were transferred to a conducting metal strip ("Kanthal" FeNiCr-alloy strip, resistance 0.152Ohms/m, ca. 17 cm). Upon application of a DC voltage of 4V and a current of 6A, which is reduced to 4A after 20sec, a brownish residue was formed, which was re-dissolved for further use in 2ml dist. water. The resulting flavour impressions were the same as with experiments 1-3, respectively.

### Examples 7, 8, 9

### Experimental procedure: conducting metal strip.

The buffered reaction mixtures (20µl) as described in examples 1, 2, 3, respectively were transferred to a conducting metal strip ("Kanthal" FeNiCr-alloy strip, resistance 0.152Ohms/m, ca. 17 cm). Upon application of a DC voltage of 5.5V and a current of 8A, a brownish residue was formed within 6 seconds, after which the electrical current source was switched off. The residue was re-dissolved for further use in 2ml dist. water. The resulting flavour impressions were the same as with experiments 1-3, respectively.

## Claims

1. Process for preparing a flavouring mix, which process comprises:
- heating an amount of between 10 mg and 10 g of a composition comprising a sugar or carbohydrate source and a nucleophilic species and at least 20% water to a temperature of 100-250°C,
- reducing the water content during the heating to less than 5% wt within 1 minute after the application of heat is started.

2. Process according to claim 1, wherein the nucleophilic species comprises biogenic amines, amino acid(s), sources of amino acids such as peptides or proteins and their hydrolysates or extracts, HVP, yeast extracts, yeast hydrolysates, soy sauces or mixtures thereof.

3. Process according to claim 1-2, wherein the reactants comprise a sugar and an amino acid, or source of a sugar and a source of an amino acid.

4. Process according to claim 1-3, wherein the aqueous solution is a homogeneous solution.

5. Process according to claim 1-4, wherein the water content of the composition is reduced to less than 5% wt. within 20 seconds after the application of heat is started.

6. Process according to claim 1-5, wherein the temperature reaches a maximum of between 100 and 200°C, preferably between 120 and 180°C.

7. Process according to claim 1-6, wherein the aqueous solution comprises next to the reactants a buffer solution.

8. Process according to claim 1-7, wherein the heating is carried out by electrical resistance elements.

9. Food vending machine comprising food processing equipment comprising:
- a reaction vessel
- means for filling the reaction vessel with an aqueous solution of reactants
- means for heating the contents of the reaction vessel within 15 minutes to a temperature of above 100°C
- means for emptying the vessel,
wherein the vessel is constructed such that the water from the aqueous solution of reactants may be removed prior to or during heating the contents of the reaction vessel.

10. Vending machine according to claim 9, wherein the water is removed from the reaction vessel by evaporation.

11. Vending machine according to claim 9-10, wherein the means for heating the contents of the reaction vessel are able to heat the contents within 1 minute to a temperature of above 100°C.

12. Vending machine according to claim 11, wherein the means for heating the contents of the reaction vessel are able to heat the contents within 20 seconds to a temperature of above 100°C.

13. Vending machine according to claim 9-12, for selling soup or snacks.

14. Vending machine according to claim 9-13 wherein the means for heating the contents of the reaction vessel comprise electrical resistance elements.

## Patentansprüche

1. Verfahren zum Herstellen einer Geschmacksmischung, wobei das Verfahren umfasst:
- Erhitzen einer Menge von zwischen 10 mg und 10 g einer Zusammensetzung, umfassend eine Zucker- oder Kohlenhydratquelle und eine nukleophile Spezies und mindestens 20% Wasser, auf eine Temperatur von 100-250°C,
- Reduzieren des Wassergehalts während des Erhitzens auf weniger als 5 Gewichtsprozent innerhalb 1 Minute nachdem die Anwendung von Wärme begonnen hat.

2. Verfahren nach Anspruch 1, wobei die nukleophile Spezies biogene Amine, Aminosäure(n), Quellen von Aminosäuren, wie Peptide oder Proteine und deren Hydrolysate oder Extrakte, HVP, Hefeextrakte, Hefehydrolysate, Sojasaucen, oder Gemische davon umfasst.

3. Verfahren nach Anspruch 1-2, wobei die Reaktanten einen Zucker und eine Aminosäure oder eine Quelle eines Zuckers und eine Quelle einer Aminosäure umfassen.

4. Verfahren nach Anspruch 1-3, wobei die wässrige Lösung eine homogene Lösung ist.

5. Verfahren nach Anspruch 1-4, wobei der Wassergehalt der Zusammensetzung innerhalb 20 Sekunden, nachdem die Anwendung von Wärme begonnen hat, auf weniger als 5 Gewichtsprozent reduziert wird.

6. Verfahren nach Anspruch 1-5, wobei die Temperatur ein Maximum zwischen 100 und 200°C, vorzugsweise zwischen 120 und 180°C, erreicht.

7. Verfahren nach Anspruch 1-6, wobei die wässrige Lösung neben den Reaktanten eine Pufferlösung umfasst.

8. Verfahren nach Anspruch 1-7, wobei das Erhitzen durch elektrische Widerstandselemente ausgeführt wird.

9. Lebensmittelautomat, umfassend eine Lebensmittelverarbeitungsausrüstung, umfassend:
- ein Reaktionsgefäß,
- Mittel zum Füllen des Reaktionsgefäßes mit einer wässrigen Reaktantenlösung,
- Mittel zum Erhitzen des Inhalts des Reaktionsgefäßes innerhalb 15 Minuten auf eine Temperatur oberhalb 100°C,
- Mittel zum Leeren des Gefäßes,
wobei das Gefäß derart aufgebaut ist, dass das Wasser aus der wässrigen Reaktantenlösung vor oder während des Erhitzens des Inhalts des Reaktionsgefäßes entfernt werden kann.

10. Automat nach Anspruch 9, worin das Wasser aus dem Reaktionsgefäß durch Verdampfen entfernt wird.

11. Automat nach Anspruch 9-10, worin die Mittel zum Erhitzen des Inhalts des Reaktionsgefäßes den Inhalt innerhalb 1 Minute auf eine Temperatur oberhalb 100°C erhitzen können.

12. Automat nach Anspruch 11, worin die Mittel zum Erhitzen des Inhalts des Reaktionsgefäßes den Inhalt innerhalb 20 Sekunden auf eine Temperatur oberhalb 100°C erhitzen können.

13. Automat nach Anspruch 9-12 zum Verkaufen von Suppe oder Snacks.

14. Automat nach Anspruch 9-13, worin die Mittel zum Erhitzen des Inhalts des Reaktionsgefäßes elektrische Widerstandselemente umfassen.

## Revendications

1. Procédé de préparation d'un mélange aromatisant, ledit procédé comprenant les étapes consistant à :
- chauffer une quantité comprise entre 10 mg. et 10 g. d'une composition comprenant un sucre ou une source d'hydrate de carbone et une espèce nucléophile et au moins 20 % d'eau à une température de 100 - 250°C ;
- réduire la teneur en eau pendant le chauffage à un niveau inférieur à 5 % en poids en moins d'une minute après que l'on commence à appliquer la chaleur.

2. Procédé selon la revendication 1, dans lequel l'espèce poly nucléophile comprend des amines biogéniques, un (des) acide(s) aminé(s), des sources d'acides aminés telles que des peptides ou des protéines et leurs hydrolysats ou extraits, des HVP, des extraits de levure, des hydrolysats de levure, des sauces de soja ou des mélanges de ceux-ci.

3. Procédé selon les revendications 1 - 2, dans lequel les réactifs comprennent un sucre et un acide aminé, ou une source d'un sucre et une source d'un acide aminé.

4. Procédé selon les revendications 1 - 3, dans lequel la solution aqueuse est une solution homogène.

5. Procédé selon les revendications 1 - 4, dans lequel la teneur en eau de là composition est réduite à un niveau inférieur à 5 % en poids en 20 secondes après que l'on a commencé à appliquer la chaleur.

6. Procédé selon les revendications 1 - 5, dans lequel la température atteint un maximum compris entre 100 et 200°C, de préférence entre 120 et 180°C.

7. Procédé selon les revendications 1 - 6, dans lequel la solution aqueuse comprend en même temps que les réactifs, une solution tampon.

8. Procédé selon les revendications 1 - 7, dans lequel le chauffage est effectué grâce à des éléments de résistance électrique.

9. Machine distributrice d'aliments comprenant un équipement de fabrication d'aliments comprenant :
- une cuve de réaction,
- des moyens pour remplir la cuve de réaction avec une solution aqueuse de réactifs,
- des moyens pour chauffer le contenu de la cuve de réaction en 15 minutes à une température de 100°C
- des moyens pour vider la cuve,
dans laquelle la cuve est construite de telle sorte que l'eau de la solution aqueuse de réactifs peut être éliminée avant ou pendant le chauffage du contenu de la cuve de réaction.

10. Machine distributrice selon la revendication 9, dans laquelle l'eau est éliminée de la cuve de réaction par évaporation.

11. Machine distributrice selon les revendications 9 - 10, dans laquelle les moyens de chauffage du contenu de la cuve de réaction sont capables de chauffer le contenu en une minute à une température supérieure à 100°C.

12. Machine distributrice selon la revendication 11, dans laquelle les moyens de chauffage du contenu de la cuve de réaction sont capables de chauffer le contenu en vingt secondes à une température supérieure à 100°C.

13. Machine distributrice selon les revendications 9 - 12, pour la vente de soupes ou de snacks.

14. Machine distributrice selon les revendications 9 - 13, dans laquelle les moyens de chauffage du contenu de la cuve de réaction comprennent des éléments de résistances électriques.
